# EUROPEAN PATENT APPLICATION

(11) **EP 1 081 194 A1**
(43) Date of publication of application: **07.03.2001**
(21) Application number: 00906625.9
(22) Date of filing: 02.03.2000
(51) Int. Cl.: C08L 101/00, C08L 23/00, C08L 45/00, C08L 65/00, C08K 5/053, G02B 1/04, B65D 1/00, C08J 5/18

(54) **THERMOPLASTIC RESIN COMPOSITION AND USE THEREOF**

(30) Priority: 04.03.1999 JP 5772599; 13.05.1999 JP 13231799
(71) Applicant: Mitsui Chemicals, Inc., Tokyo 100-6070 (JP)
(72) Inventor: NISHIJIMA, Shigetoshi, Kuga-gun, Yamaguchi 740-0061 (JP); YAMAMOTO, Yohzoh, Kuga-gun, Yamaguchi 740-0061 (JP)
(74) Representative: HOFFMANN - EITLE
(86) International application number: JP0001226
(87) International publication number: WO0052098

(57) **Abstract**

The thermoplastic resin composition of the present invention comprises a thermoplastic resin which contains a specific amount of a polyvalent alcohol having a carbon atom number/hydroxyl number ratio of 1.5 to 30 and having carbon atom number of 6 or more. The thermoplastic resin has a HAZE value of not greater than 10% and whole light transmittance of not less than 80%, when measured with a molded article in a thickness of 3 mm according to ASTM-D1003; water absorption rate of not greater than 0.1% as measured by immersion in water at 23°C for 100 hours; a glass transition temperature of not lower than 10°C; and an aromatic ring content of not greater than 20 wt%. The thermoplastic resin is selected from a cyclic olefin-based polymer, a polycyclohexane-type resin and a 4-methyl-1-pentene-based polymer. The composition of the invention is not only excellent in transparency, low birefringence, heat resistance, mechanical properties, moisture resistance, etc. but can maintain the transparency even with any environmental change. Therefore the thermoplastic resin composition is advantageously used for plastic lenses, optical recording media, containers, transparent sheets and boards, etc.

## Description

### TECHNICAL FIELD

The present invention relates to a thermoplastic resin composition having excellent transparency and low water absorption and capable of retaining the transparency even with a change in environmental conditions. More particularly, the present invention relates to a thermoplastic resin composition having a less reduction in transparency especially at a high temperature and a high humidity, and to use thereof.

### TECHNICAL BACKGROUND

In general, transparent resins have been used for a wide variety of applications not only for industrial or home use applications but also for medical and pharmaceutical applications, foodstuffs, experimental devices and optical applications, taking advantage of the characteristic properties of excellent light transmittance of the resins, which makes it easy to verify the contents when molded into containers or packing materials, and convenience to carry as well as easy moldability. Specifically, transparent resins are advantageously used as transparent packages for foodstuffs and medicaments, and also for optical applications such as lenses of spectacles, pick-up lenses, fθ lenses, etc. as well as for optical recording media such as MO, DVD, CD or the like.

In these applications, resins are sometimes exposed to conditions of high temperature and high humidity. Where resins are used for packages of foodstuffs or medicaments, the packages are usually subjected to a washing treatment with hot water or steam for sterilization of the packages. Especially the packages for medicaments are usually sterilized with steam. Furthermore, where these resins are employed for optical products such as lenses for optical devices, optical recording media and packaging materials for foodstuffs or medicaments, these products are often compelled to be put under severe conditions of high temperature and high humidity during transportation of the products. Under such conditions, even a trace amount of the permeated water might aggregate at a decreased ambient temperature and minute cracks or voids that are believed to be caused by the aggregation might occur. The cracks or voids make the external appearance of the products opaque, often resulting in deterioration of transparency.

Polycarbonate, polymethyl methacrylate, polyethylene terephthalate, etc. are hitherto known as resins having excellent transparency. Polycarbonate has excellent rigidity, heat resistance, thermal aging resistance and impact resistance but its chemical resistance is poor. When molded into an optical substrate or the like, polycarbonate encounters such problems that birefringence is large and water absorption rate is not sufficiently low (poor waterproofing). Although polymethyl methacrylate is excellent in mechanical properties, its chemical resistance, heat resistance and weather resistance are poor. Polyethylene terephthalate is excellent in heat resistance and mechanical properties but involves problems that it is susceptible to hydrolysis because of unstable nature against a strong acid or an alkali.

Turning to polyolefin resin, this resin is also known as a resin having excellent transparency. In particular, cyclic olefin-based polymers derived from bulky cyclic olefins are proposed as polyolefin resins having well-balanced physical properties in both rigidity and transparency. As a random copolymer of the ethylene and the cyclic olefin, for instance, a copolymer of ethylene and 2,3-dihydroxydicyclopentadiene (U.S. Patent No. 2,883,312) or a copolymer of ethylene and 5-ethylidenenorbornene has been proposed.

Through investigations on such cyclic olefin-based polymers, the applicant has also found that especially non-crystalline cyclic olefin-based polymers such as an ethylene-cyclic olefin copolymer are excellent, as compared to α-olefin (co)polymers, in various properties, e.g., transparency, low birefringence, moisture resistance (low water absorption), heat resistance, chemical resistance, solvent resistance, precision moldability, electric properties such as dielectric properties, etc., mechanical properties such as rigidity (see, e.g., Japanese Patent Laid-Open Publication Nos. 60(1985)-168708, 61(1986)-115916 and 61(1986)-120816). For these reasons, cyclic olefin-based polymers have been considered for use in a wide variety of applications. Especially by making efficient use of their excellent transparency, it is considered to utilize these resins for optical devices, medical and pharmaceutical containers, food containers, etc.

However, studies on applications of such cyclic olefin-based polymers have revealed problems that these cyclic olefin-based polymers become clouded when environmental conditions change, e.g., when the environmental conditions change from a high temperature and high humidity to ambient or normal temperature and humidity, which results in deteriorating the transparency or lowering the light transmittance.

Furthermore, poly-4-methyl-1-pentene resin has been used for medical and pharmaceutical containers which require steam sterilization because of its excellent transparency, heat resistance, rigidity and moisture resistance, but under some steam sterilization conditions, the transparency is ruined occasionally.

Such a deterioration in transparency under the conditions of high temperature and high humidity tends to be caused with a transparent resin having low water absorption rate. This phenomenon has also been observed with styrene polymers, polycyclohexadiene, etc.

For the reasons above, it has been desired to develop a thermoplastic resin that causes no deterioration in transparency accompanied by an environmental change, can stably keep the excellent transparency and can be advantageously used for the foregoing applications.

### DISCLOSURE OF THE INVENTION

In order to achieve the objects described above, the present invention provides a thermoplastic resin composition having excellent properties in transparency, low birefringence, heat resistance, thermal aging resistance, chemical resistance, solvent resistance, dielectric properties, various mechanical properties, precision moldability, and moisture resistance (low water absorption), etc., especially capable of stably maintaining the excellent transparency even if environmental conditions change, and use thereof.

The thermoplastic resin composition in accordance with the present invention comprises:
[A] a thermoplastic resin having a HAZE value of not greater than 10% and whole light transmittance of not less than 80%, when measured with a molded article in a thickness of 3 mm according to ASTM-D1003; water absorption rate of not greater than 0.1% as measured by immersion in water at 23°C for 100 hours; a glass transition temperature of not lower than 10°C; and an aromatic ring content of not greater than 20 wt%; and,
[B] a polyvalent alcohol having at least 6 carbon atoms and having a molecular weight of not greater than 2000, wherein a ratio of the carbon atom number to the hydroxy group number in the same molecule is between 1.5 and 30, inclusive (in which the polyvalent alcohol may optionally contain, in the molecule thereof, an ether bond, a thioether bond, an alicyclic hydrocarbon group or an aromatic hydrocarbon group); in which the polyvalent alcohol [B] is contained in an amount of 0.01 to 10 parts by weight based on 100 parts by weight of the thermoplastic resin [A].
   The thermoplastic resin described above is preferably at least one resin selected from (a), (b) and (C) below:
   (a) a cyclic olefin-based polymer selected from the group consisting of [A-1], [A-2], [A-3] and [A-4] below;
   (b) a polycyclohexane-type resin; and,
   (C) a 4-methyl-1-pentene-based polymer;
[A-1] an α-olefin-cyclic olefin random copolymer obtained by copolymerizing an α-olefin having 2 to 20 carbon atoms with a cyclic olefin represented by formula (I) or (II) below: 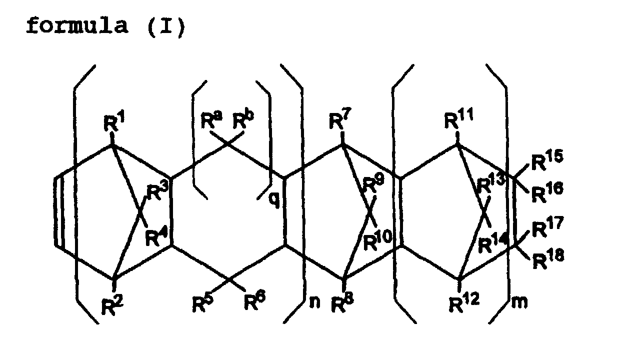 wherein n is 0 or 1; m is 0 or an integer of at least 1; q is 0 or 1; each of R¹ through R¹⁸ and R^{a} and R^{b} independently represents a hydrogen atom, a halogen atom or a hydrocarbon group; R¹⁵ through R¹⁸ may be combined with each other to form a monocyclic or polycyclic ring, which monocyclic or polycyclic ring may contain a double bond(s) and, R¹⁵ and R¹⁶ or R¹⁷ and R¹⁸ may be combined together to form an alkylidene group; and, 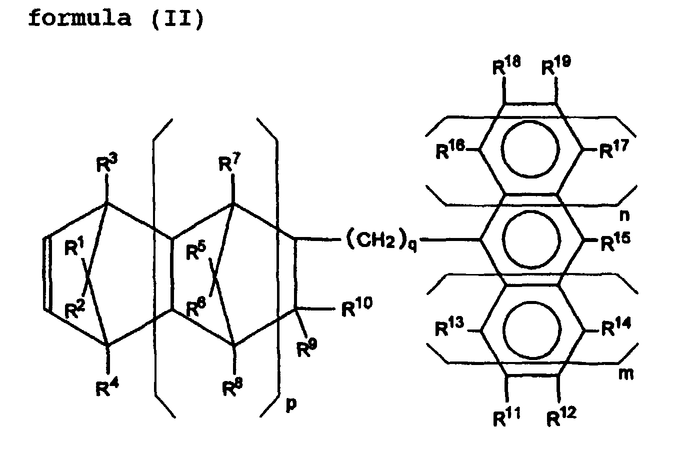 wherein p and q each are 0 or an integer of at least 1; m and n each are 0, 1 or 2; each of R¹ through R¹⁹ independently represents a hydrogen atom, a halogen atom, an aliphatic hydrocarbon group, an alicyclic hydrocarbon group, an aromatic hydrocarbon group or an alkoxy group; the carbon atom to which R⁹ and R¹⁰ are bound may be bonded to the carbon atom to which R¹³ or R¹¹ are bound, directly or via an alkylene group having 1 to 3 carbon atoms; or when n and m are 0, R¹⁵ and R¹² or R¹⁵ and R¹⁹ may be combined together to form a monocyclic or polycyclic aromatic ring.
[A-2] a ring-opened polymer or copolymer of the cyclic olefin represented by formula (I) or (II) above;
[A-3] a hydrogenated product of the ring-opened polymer or copolymer [A-2] described above; and,
[A-4] a graft-modified compound of [A-1], [A-2] or [A-3] described above.

Furthermore, the thermoplastic resin composition in accordance with the present invention comprises:
[A] at least one thermoplastic resin selected from (a) through (C) below:
   (a) a cyclic olefin-based polymer selected from the group consisting of [A-1], [A-2], [A-3] and [A-4] below;
   (b) a polycyclohexane-type resin; and,
   (C) a 4-methyl-1-pentene-based polymer; and,
[B] a polyvalent alcohol having at least 6 carbon atoms and having a molecular weight of not greater than 2000, wherein a ratio of the carbon atom number to the hydroxy group number in the same molecule is between 1.5 and 30, inclusive (in which the polyvalent alcohol may optionally contain in the molecule thereof an ether bond, a thioether bond, an alicyclic hydrocarbon group or an aromatic hydrocarbon groups); in which the polyvalent alcohol [B] is contained in an amount of 0.01 to 10 parts by weight based on 100 parts by weight of the thermoplastic resin [A];
[A-1] an α-olefin-cyclic olefin random copolymer obtained by copolymerizing an α-olefin having 2 to 20 carbon atoms with a cyclic olefin represented by formula (I) or (II) described above;
[A-2] a ring-opened polymer or copolymer of the cyclic olefin represented by formula (I) or (II) above;
[A-3] a hydrogenated product of the ring-opened polymer or copolymer [A-2] described above; and,
[A-4] a graft-modified compound of [A-1], [A-2] or [A-3] described above.

The polyvalent alcohol is preferably the one in the molecule of which at least one hydroxyl group is bonded to the primary carbon atom.

According to the present invention, plastic lenses, containers, transparent sheets or boards and optical recording media prepared from the thermoplastic resin composition are provided as preferred applications of the thermoplastic resin composition.

### BEST EMBODIMENT OF THE INVENTION

The resin composition in accordance with the present invention comprises the thermoplastic resin having an excellent transparency and a low water absorption rate and the specific polyvalent alcohol. First, the following description turns on thermoplastic resin.

### Thermoplastic resin [A]

The thermoplastic resin [A] used in the present invention comprises carbon atoms and hydrogen atoms as major constituents. The resin has a transparency in terms of a HAZE value of preferably 10% or less, more preferably 5% or less, and has whole light transmittance of generally 80% or higher, preferably 85% or higher, when measured in a thickness of 3 mm in accordance with ASTM-D1003. The thermoplastic resin also has a low water absorption rate of 0.1% or less, when measured by immersing the resin in water at 23°C for 100 hours.

The thermoplastic resin preferably has a glass transition temperature (Tg) of 10°C or higher when measured with a differential scanning calorimeter (DSC). Furthermore, the thermoplastic resin preferably contains an aromatic ring of 20 wt% or less in the molecule making up the resin.

Such thermoplastic resins include a cyclic olefin-based polymer, a poly-4-methyl-1-pentene resin and a polycyclohexane-type resin. In addition to these resins, the resins further include such thermoplastic resins that have the transparency, glass transition temperature and aromatic ring content defined above and have the skeletal structure mainly composed of carbon atoms and hydrogen atoms with hydrophilic functional groups such as a hydroxyl group, an ester group, a carbonyl group or an amido group, so long as the content of such functional groups is low enough to impart to the resins the water absorption rate lower than the upper limit defined above. Examples of such resins are resins obtained by modifying a cyclic olefin-based polymer with an anhydride of acid represented by maleic acid.

Among these resins, preferred is at least one resin selected from:
(a) a cyclic olefin-based polymer selected from the group consisting of [A-1], [A-2], [A-3] and [A-4] later described;
(b) a polycyclohexane-type resin; and,
(c) 4-methyl-1-pentene-based polymer.

According to the present invention, at least one selected from:
(a) a cyclic olefin-based polymer selected from the group consisting of [A-1], [A-2], [A-3] and [A-4] later described;
(b) a polycyclohexane-type resin; and,
(c) 4-methyl-1-pentene-based polymer may also be used as the thermoplastic resin [A], without any restriction to the physical property ranges defined above.

Each of the thermoplastic resins will be described below more specifically.

### Cyclic olefin-based polymer (a)

According to the present invention, the cyclic olefin-based polymers preferably used in the present invention are at least one selected from the group consisting of:
[A-1] an α-olefin-cyclic olefin random copolymer obtained by copolymerizing an α-olefin having 2 to 20 carbon atoms with the cyclic olefin represented by formula (I) or (II) below;
[A-2] a ring-opened polymer or copolymer of the cyclic olefin represented by formula (I) or (II) described below;
[A-3] a hydrogenated product of the ring-opened polymer or copolymer [A-2] described above; and,
[A-4] a graft-modified compound of [A-1], [A-2] or [A-3] described above.

Now, the cyclic olefin shown by formula (I) or (II) as making up the cyclic olefin-based polymer (a) is described below.

The cyclic olefin used in the present invention is represented by formula (I) or (II) below.

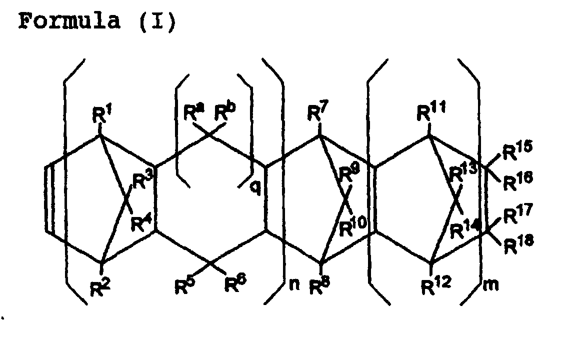

In the formula (I) above, n is 0 or 1; m is 0 or an integer of 1 or larger; and q is 0 or 1. When q is 1, each of R^{a} and R^{b} is independently an atom or a hydrocarbon group, shown below; and when q is 0, there is no bond binding R^{a} and R^{b} but instead, the carbon atoms at the both sides are combined together to form a 5-membered ring.

Each of R¹ through R¹⁸ as well as R^{a} and R^{b} is independently a hydrogen atom, a halogen atom or a hydrocarbon group. Throughout the specification the halogen atom refers to a fluorine atom, a chlorine atom, a bromine atom or an iodine atom.

The hydrocarbon group for each of R¹ to R¹⁸ as well as R^{a} and R^{b} independently represents generally an alkyl group of 1 to 20 carbon atoms, a cycloalkyl group of 3 to 15 carbon atoms or an aromatic hydrocarbon group. Specific examples of the alkyl group include methyl, ethyl, propyl, isopropyl, amyl, hexyl, octyl, decyl, dodecyl and octadecyl. A typical example of the cycloalkyl group is cyclohexyl. Specific examples of the aromatic hydrocarbon group include phenyl and naphthyl. These hydrocarbon groups may optionally be substitution products with a halogen atom(s) as a replacement of a hydrogen atom(s).

In the formula (I) above, R¹⁵ through R¹⁸ may be combined (together with each other) to form a monocyclic or polycyclic ring. The monocyclic or polycyclic ring thus formed may contain a double bond(s). Specific examples of the monocyclic or polycyclic ring formed are shown below.

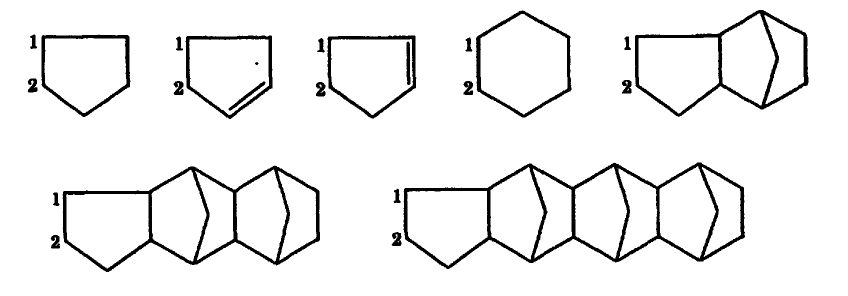

In the formulas exemplified above, the carbon atom marked with 1 or 2 indicates the carbon atom to which R¹⁵(R¹⁶) or R¹⁷(R¹⁸) is bound, respectively, in formula (I). Furthermore, R¹⁵ and R¹⁶ or R¹⁷ and R¹⁸ may be combined together to form an alkylidene group. In general, such an alkylidene group refers to an alkylidene group having 2 to 20 carbon atoms. Specific examples of such an alkylidene group are ethylidene, propylidene and isopropylidene.

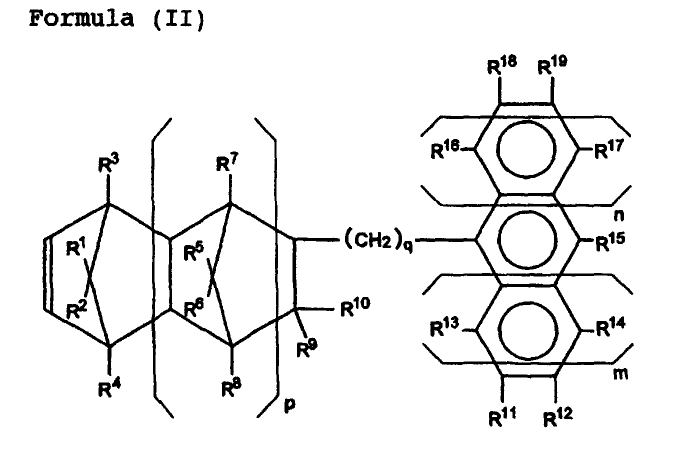

In the formula (II) above, p and q each are 0 or an integer of 1 or larger; m and n each are 0, 1 or 2; and each of R¹ through R¹⁹ is independently a hydrogen atom, a halogen atom, a hydrocarbon group or an alkoxy group.

The halogen atom has the same significance as defined for that in the formula (I) above.

The hydrocarbon group is independently an alkyl group of 1 to 20 carbon atoms, a halogenated alkyl group of 1 to 20 carbon atoms, a cycloalkyl group of 3 to 15 carbon atoms or an aromatic hydrocarbon group.

Specific examples of the alkyl group include methyl, ethyl, propyl, isopropyl, amyl, hexyl, octyl, decyl, dodecyl and octadecyl. A typical example of the cycloalkyl group is cyclohexyl. Examples of the aromatic hydrocarbon group include an aryl group and an aralkyl group, specifically, phenyl, tolyl, naphthyl, benzyl and phenylethyl.

Specific examples of the alkoxy group include methoxy, ethoxy and propoxy. These hydrocarbon and alkoxy groups may optionally be substituted with a fluorine, chlorine, bromine or iodine atom(s).

The carbon atom to which R⁹ and R¹⁰ are bound may be linked to the carbon atom to which R¹³ or R¹¹ is bound, directly or indirectly via an alkylene group of 1 to 3 carbon atoms. That is, when the two carbon atoms described above are bound to each other via an alkylene group, the groups shown by R⁹ and R¹³ or the groups shown by R¹⁰ and R¹¹ are combined together to form an alkylene group selected from a methylene group (-CH₂-), an ethylene group (-CH₂CH₂-) and a propylene group (-CH₂CH₂CH₂-).

Furthermore, when n and m are both 0, R¹⁵ and R¹² or R¹⁵ and R¹⁹ may be combined together to form a monocyclic or polycyclic aromatic ring. In this case, for example, the monocyclic or polycyclic aromatic ring includes groups in which R¹⁵ and R¹² form an additional aromatic ring(s) shown below: 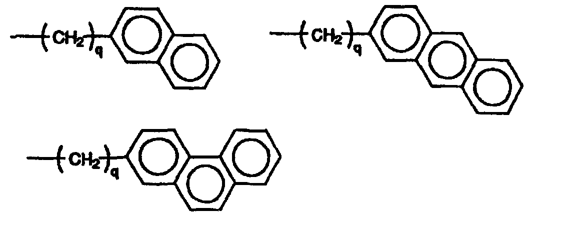 wherein q has the same significance as defined for q in the formula (II).

The cyclic olefin represented by formula (I) or (II) will be described more specifically. One example includes a bicyclo[2.2.1]-2-heptene (also termed norbornene): 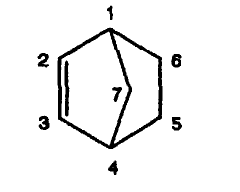 wherein numerical figures of 1 to 7 indicate the position of carbons, and derivatives thereof obtained by substitution of the norbornene with a hydrocarbon group(s).

Examples of the hydrocarbon group as the substituent include 5-methyl, 5,6-dimethyl, 1-methyl, 5-ethyl, 5-n-butyl, 5-isobutyl, 7-methyl, 5-phenyl, 5-methyl-5-phenyl, 5-benzyl, 5-tolyl, 5-(ethylphenyl), 5-(isopropylphenyl), 5-(biphenyl), 5-(β-naphthyl), 5-(α-naphthyl), 5-(anthracenyl) and 5,6-diphenyl.

As the other derivatives, there are bicyclo[2.2.1]-2-heptene derivatives such as cyclopentadiene-acenaphtbylene adduct, 1,4-methano-1,4,4a,9a-tetrahydrofluorene, 1,4-methano-1,4,4a,5,10,10a-hexahydroanthracene, etc.

Additional examples of the other derivatives include a tricyclo[4.3.0.1²'⁵]-3-clecene derivative such as tricyclo[4.3.0.1²'⁵]-3-decene, 2-methyltricyclo[4.3.0.1²'⁵]-3-decene and 5-methyltricyclo[4.3.0.1²'⁵]-3-decene; a tricyclo[4.4.0.1^{2,5}]-3-undecene derivative such as tricyclo[4.4.0.1²'⁵]-3-undecene and 10-methyltricyclo[4.4.0.1²'⁵]-3-undecene, tetracyclo[4.4.0.1²'⁵.1^{7,10}]-3-dodecene shown by the following formula: 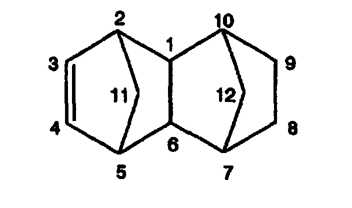 (hereinafter merely referred to as tetracyclododecene; in the formula above, numerals of 1 to 12 indicate the positions of carbon atoms), and derivatives thereof obtained by substitution of this compound with a hydrocarbon group(s).

Specific examples of the hydrocarbon group as the substituent include 8-methyl, 8-ethyl, 8-propyl, 8-butyl, 8-isobutyl, 8-hexyl, 8-cyclohexyl, 8-stearyl, 5,10-dimethyl, 2,10-dimethyl, 8,9-dimethyl, 8-ethyl-9-methyl, 11,12-dimethyl, 2,7,9-trimethyl, 2,7-dimethyl-9-ethyl, 9-isobutyl-2,7-dimethyl, 9,11,12-trimethyl, 9-ethyl-11,12-dimethyl, 9-isobutyl-11,12-dimethyl, 5,8,9,10-tetramethyl, 8-ethylidene, 8-ethylidene-9-methyl, 8-ethylidene-9-ethyl, 8-ethylidene-9-isopropyl, 8-ethylidene-9-butyl, 8-n-propylidene, 8-n-propylidene-9-methyl, 8-n-propylidene-9-ethyl, 8-n-propylidene-9-isopropyl, 8-n-propylidene-9-butyl, 8-isopropylidene, 8-isopropylidene-9-methyl, 8-isopropylidene-9-ethyl, 8-isopropylidene-9-isopropyl, 8-isopropylidene-9-butyl, 8-chloro, 8-bromo, 8-fluoro, 8,9-dichloro, 8-phenyl, 8-methyl-8-phenyl, 8-benzyl, 8-tolyl, 8-(ethylphenyl), 8-(isopropylphenyl), 8,9-diphenyl, 8-(biphenyl), 8-(β-naphthyl), 8-(α-naphthyl), 8-(anthracenyl) and 5,6-diphenyl.

An additional derivative is the adduct of (cyclopentadiene-acenaphthylene adduct) and cyclopentadiene.

Further examples include a tetracyclo[4.4.0.1^{2,5}.1^{7,10}]-3-dodecene derivative, pentacyclo[6.5.1.1^{3,6}.0^{2,7}.0^{9,13}]-4-pentadecene and derivatives thereof, pentacyclo[7.4.0.1^{2,5}.1^{9,12}.0^{8,13}]-3-pentadecene and derivatives thereof, a pentacyclo[6.5.1.1.^{3,6}.0^{2,7}.0^{9,13}]-4,10-pentadecadiene compound, pentacyclo[8.4.0.1^{2,5}.1^{9,12}.0^{8,13}]-3-hexadecene and derivatives thereof, pentacyclo[6.6.1.1^{3,6}.0^{2,7}.0^{9,14}]-4-hexadecene and derivatives thereof, hexacyclo[6.6.1.1^{3,6}.1^{10,13}.0^{2,7}.0^{9,14}]-4-heptadecene and derivatives thereof, heptacyclo[8.7.0.1^{2,9}.1⁴'⁷.1^{11,17}.0^{3,8}.0^{12,16}]-5-eicosene and derivatives thereof, heptacyclo[8.7.0.1^{3,6}.1^{10,17}.1^{12,15}.0^{2,7}.0^{11,16}]-4-eicosene and derivatives thereof, heptacyclo[8.8.0.1^{2,9}.1^{4,7}.^{11,18}.0^{3,8}.0^{12,17}]-5-heneicosene and derivatives thereof, octacyclo[8.8.0.1^{2,9}.1^{4,7}.1^{11,18}.1^{13,16}.0^{3,8}.0^{12,17}]-5-docosene and derivatives thereof, nonacyclo[10.9.1.1^{4,7}.1¹³'²⁰.1^{15,18}.0^{2,10}.0^{3,8}.0^{12,21}.0¹⁴'¹⁹]-5-pentacosene and derivatives thereof, nonacyclo[10.10.1.1^{5,8}.1^{14,21}.1^{16,19}.0^{2,11}.0^{4,9}.0^{13,22}.0^{15,20}]-6-hexacosene and derivatives thereof, etc.

Specific examples of the cyclic olefin shown by formula (I) or (II) which can be used in the present invention are those described above. More detailed structures of these compounds are described in Japanese Patent Laid-Open Publication No. 7(1995)-145213, paragraph numbers [0032] through [0054]. The compounds disclosed therein can also be employed as the cyclic olefins of the present invention.

The cyclic olefins shown by formula (I) or (II) may be prepared by, e.g., a Diels-Alder reaction between cyclopentadine and olefins having the corresponding structure.

These cyclic olefins may be employed alone or in combination of two or more.

The cyclic olefin-based polymers (a) used in the present invention may be produced using the cyclic olefins of formula (I) or (II) described above, in accordance with the processes disclosed in, e.g., Japanese Patent Laid-Open Publication Nos. 60(1985)-168708, 61(1986)-120816, 61(1986)-115912, 61(1986)-115916, 61(1986)-271308, 61(1986)-272216, 62(1987)-252406 and 62(1987)-252407, whereby reaction conditions are appropriately chosen.

The random copolymer [A-1] of the α-olefin having 2 to 20 carbon atoms and the cyclic olefin contains constituent units derived from α-olefin generally in an amount of 5 to 95% by mol, preferably 20 to 80% by mol, and constituent units derived from the cyclic olefin generally in an amount of 5 to 95% by mol, preferably 20 to 80% by mol. The component ratio of the α-olefin to the cyclic olefin in the composition is determined by ¹³C-NMR.

Hereinafter, the α-olefin having 2 to 20 carbon atoms which makes up the α-olefin-cyclic olefin random copolymer [A-1] is explained. The α-olefin may be either linear or branched. Specific examples of the α-olefin include linear α-olefins having 2 to 20 carbon atoms such as ethylene, propylene, 1-butene, 1-pentene, 1-hexene, 1-octene, 1-decene, 1-dodecene, 1-tetradecene, 1-hexadecene, 1-octadecene and 1-eicosene; and branched α-olefins having 4 to 20 carbon atoms such as 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene and 3-ethyl-1-hexene. among these olefins, linear α-olefins having 2 to 4 carbon atoms are preferred, with more preferred being ethylene. These linear or branched α-olefins may be used alone or in combination of two or more.

In the α-olefin-cyclic olefin random copolymer [A-1], the constituent units derived from the α-olefin having 2 to 20 carbon atoms and the constituent units derived from the cyclic olefin are arranged at random to bind and form substantially a linear structure. The resulting copolymer is substantially of a linear structure and substantially free of a gel like cross-linking structure. Such a structure can be confirmed by the absence of any insoluble matter in a solution when the copolymer is dissolved in an organic solvent. For instance, it can be verified by the fact that the copolymer is completely dissolved in decalin at 135°C, when the intrinsic viscosity [η] is measured.

In the α-olefin-cyclic olefin random copolymer [A-1] used in the present invention, it is believed that at least a part of the cyclic olefin represented by formula (I) or (II) above would make up the following recurring unit shown by formula (III) or (IV) below.

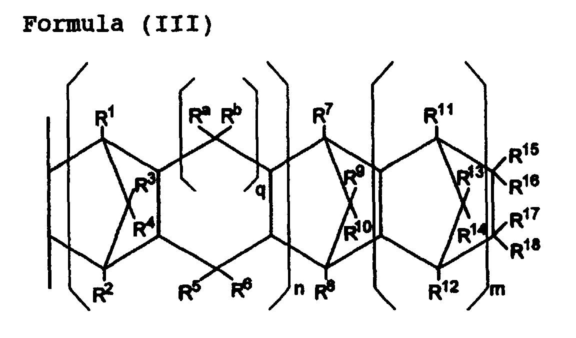

In formula (III), n, m, q, R¹ through R¹⁸ as well as R^{a} and R^{b} have the same significance as defined in formula (I).

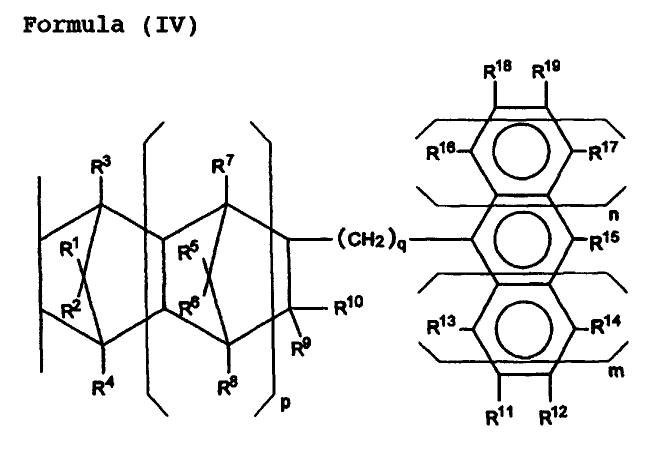

In formula (IV), n, m, p, q and R¹ through R¹⁹ have the same significance as defined in formula (II).

The α-olefin-cyclic olefin random copolymer [A-1] employed in the present invention may contain constituent units from other copolymerizable monomers, if necessary and desired, within such a range that does not damage the objects of the present invention.

As the other monomers of such purpose there are olefins other than the α-olefins having 2 to 20 carbon atoms and the cyclic olefins described above. Specific examples of these monomers include cycloolefins such as cyclobutene, cyclopentene, cyclohexene, 3,4-dimethylcyclopentene, 3-methylcyclohexene, 2-(2-methylbutyl)-1-cyclohexene and cyclooctene, 3a,5,6,7a-tetrahydro-4,7-methano-1H-indene, etc.; and non-conjugated dienes such as 1,4-hexadiene, 4-methyl-1,4-hexadiene, 5-methyl-1,4-hexadiene, 1,7-octadiene, dicyclopentadiene and 5-vinyl-2-norbornene. These other monomers may be used alone or in combination.

In the α-olefin-cyclic olefin random copolymer [A-1], the constituent units derived from the other monomers described above may be contained generally in an amount of 20% by mol or less, preferably 10% by mol or less.

The α-olefin-cyclic olefin random copolymer [A-1] used in the present invention can be prepared by the processes disclosed in the Japanese Laid-Open Publications supra, using the α-olefin having 2 to 20 carbon atoms and the cyclic olefin of formula (I) or (II). Among those processes, a preferred process comprises copolymerization in a hydrocarbon solvent using a catalyst made up from a vanadium compound soluble in the hydrocarbon solvent and an organic aluminum compound.

In this copolymerization, a solid metallocene catalyst of Group IV in the periodic table may also be used. The solid metallocene catalyst of Group IV is a catalyst comprising a transition metal compound containing a ligand with a cyclopentadienyl structure and an organic aluminum oxy compound and, if necessary, an additional organic aluminum compound. Examples of the transition metal of Group IV include zirconium, titanium and hafnium. These transition metals each has a ligand containing at least one cyclopentadienyl structure. Examples of the cyclopentadienyl structure-containing ligand include a cyclopentadienyl group which may optionally have an alkyl group(s) as the substituent, indenyl group, tetrahydroindenyl group and fluorenyl group. These groups may be bound each other via other groups such as an alkylene group. Examples of the ligands other than the cyclopentadienyl structure-containing ligands are an alkyl group, a cycloalkyl group, an aryl group and an aralkyl group.

As the organic aluminum oxy compound and the organic aluminum compound, there may be employed those conventionally used for preparation of polyolefins. Such solid Group IV metallocene catalysts of Group IV as described in, e.g., Japanese Patent Laid-Open Publication Nos. 61(1986)-221206, 64(1989)-106 and 2(1990)-173112 may be used for the present invention.

The ring-opened polymer or copolymer of the cyclic olefin [A-2] is a ring-opened polymer of the cyclic olefin shown by formula (I) or (II) described above, or a copolymer containing ring-opened polymerizatin units derived from the cyclic olefin shown by formula (I) and/or (II) described above. In the case of the copolymer, two or more different cyclic olefins are used in combination.

In the ring-opened polymer or copolymer of the cyclic olefin [A-2], it is believed that at least a part of the cyclic olefin shown by formula (I) or (II) above would make up a recurrent unit represented by formula (V) or (VI) below.

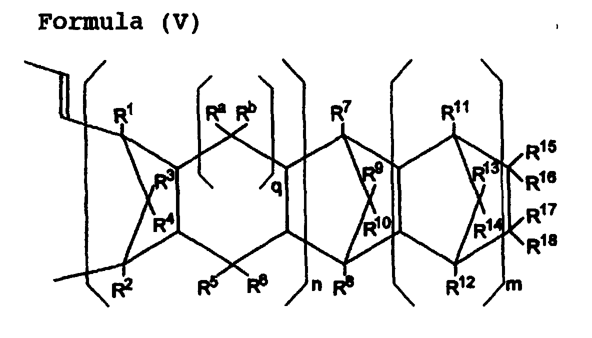

In formula (V) above, n, m, q, R¹ through R¹⁸ as well as R^{a} and R^{b} have the same significance as defined in formula (I).

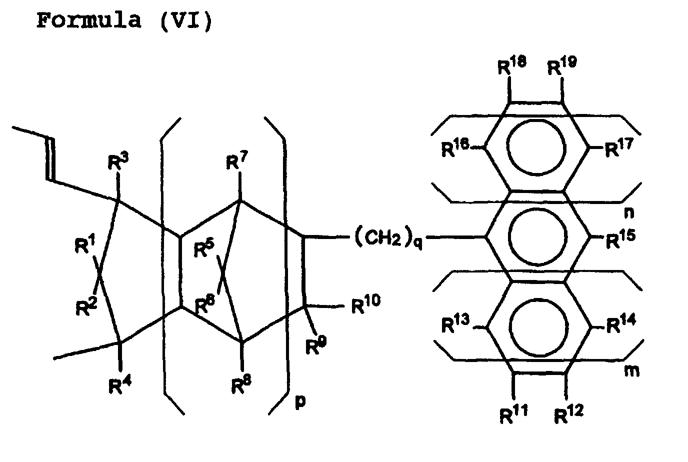

In formula (VI), n, m, p, q and R¹ through R¹⁹ have the same significance as defined in formula (II).

The ring-opened polymer or copolymer can be produced by the processes disclosed in the Japanese Patent Laid-Open Publications supra. For example, the ring-opened polymer or copolymer may be prepared by polymerizing or copolymerizing the cyclic olefin of formula (II) above in the presence of a ring opening polymerization catalyst. As the catalyst for ring opening polymerization, there may be employed a catalyst comprising the halide, nitrate or acetylacetone compound of a metal selected from ruthenium, rhodium, palladium, osmium, indium, platinum, etc. and a reducing agent; and a catalyst comprising the halide or acetylacetone compound of a metal selected from titanium, palladium, zirconium and molybdenum and an organic aluminum compound.

The hydrogenated ring-opened polymer or copolymer [A-3] is prepared by hydrogenation of the ring-opened polymer or copolymer [A-2] obtained as described above in the presence of a known hydrogenation catalyst.

In the hydrogenated ring-opened polymer or copolymer [A-3] it is believed that at least a part of the cyclic olefin shown by formula (I) or (II) above would make up a recurrent unit represented by formula (VII) or (VIII) below.

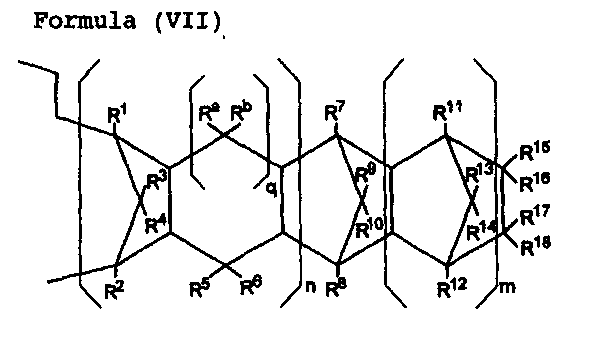

In formula (VII) above, n, m, q, R¹ through R¹⁸ as well as R^{a} and R^{b} have the same significance as defined in formula (I).

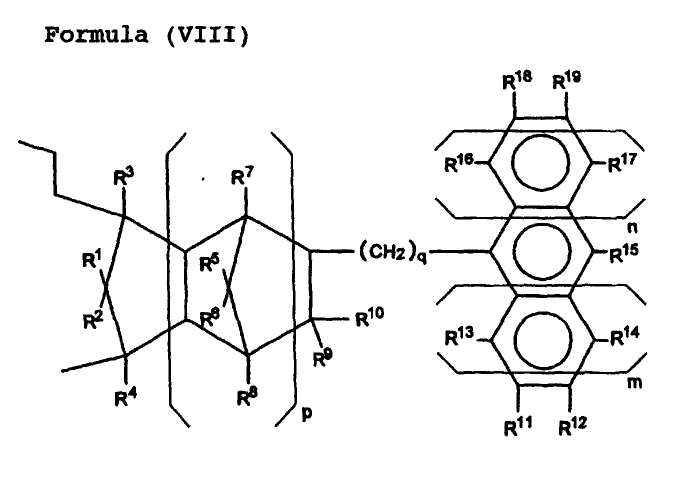

In formula (VIII), n, m, p, q and R¹ through R¹⁹ have the same significance as defined in formula (II).

The graft modified compound of the cyclic olefin-based polymer [A-4] is a graft modified product of the ethylene-cyclic olefin random copolymer [A-1], the ring-opened polymer or copolymer [A-2] or the hydrogenated ring-opened polymer or copolymer [A-3], all described hereinabove.

The graft modifier used in the present invention is generally an unsaturated carboxylic acid. Typical examples of the modifier include an unsaturated carboxylic acid such as (meth)acrylic acid, maleic acid, fumaric acid, tetrahydrophthalic acid, itaconic acid, citraconic acid, crotonic acid, isocrotonic acid, endo-cis-bicyclo[2.2.1]hept-5-ene-2,3-dicarboxilic acid (Nadic Acid™), etc.; and derivatives of these unsaturated carboxylic acids such as an unsaturated carboxylic acid anhydride, an unsaturated carboxylic acid halide, an unsaturated carboxylic acid amide, an unsaturated carboxylic acid imide, an unsaturated carboxylic acid ester, etc.

Specific examples of the unsaturated carboxylic acid derivatives include maleic anhydride, citraconic anhydride, maleyl chloride, maleimide, monomethyl maleate, dimethyl maleate and glycidyl maleate.

Of these modifiers, preferably employed are an α,β-unsaturated dicarboxylic acid and an α,β-unsaturated dicarboxylic acid anhydride, e.g., maleic acid, Nadic Acid™ and acid anhydrides of these acids. These modifiers may also be used in combination of two or more.

The graft modified compound of the cyclic olefin-based polymer may be prepared by graft polymerization of the cyclic olefin-based polymer in the presence of such a modifier incorporated to achieve a desired modification level. Alternatively, a highly graft modified compound may be prepared previously and the resulting compound is blended with an unmodified cyclic olefin-based polymer so as to obtain the graft modified compound of a desired modification level.

For preparing the graft modified compound of the cyclic olefin-based polymer from the cyclic olefin-based polymer and the graft modifier, a variety of conventional methods for modification of polymer are applicable to the present invention. For example, the graft modified compound may be prepared through graft polymerization (reaction) by adding a modifier to the cyclic olefin-based polymer in a melt state, or a method for graft reaction by adding a modifier to a solution of the cyclic olefin-based polymer in a solvent.

Such a graft reaction is carried out generally at a temperature of 60 to 350°C. The graft reaction may be performed in the presence of a radical initiator such as an organic peroxide or an azo compound.

According to the present invention, any one of [A-1], [A-2], [A-3] and [A-4] described above may be used alone as the cyclic olefin-based polymer (a), or these compounds may be used in combination within the same group or from two or more different groups.

The cyclic olefin-based polymer (a) described above has a glass transition temperature (Tg) of preferably 60 to 230°C, more preferably 70 to 120°C, as measured by DSC.

Furthermore, the cyclic olefin-based polymer (a) is non-crystalline or low crystalline and has crystallinity of usually 20% or less, preferably 10% or less, more preferably 2% or less, as measured by X ray diffraction technique.

The intrinsic viscosity [η] determined in decalin at 135°C is preferably 0.01 to 20 dl/g, more preferably 0.05 to 10 dl/g, most preferably 0.08 to 5 dl/g.

Melt flow rate (MFR) measured at 260°C under a load of 2,16 kg in accordance with ASTM-D1238 is generally ranging from 0.1 to 200 g/10 minutes, preferably 1 to 100 g/10 minutes, more preferably 3 to 60 g/10 minutes.

The softening point is usually 30°C or higher, preferably 70°C or higher, more preferably 80°C or higher, much more preferably 90 to 250°C, most preferably 100 to 200°C, as a softening point (TMA) when measured by a thermal mechanical analyzer.

Where an aromatic ring is contained in the molecule making up the resin, the content of the aromatic ring is preferably 20 wt% or less, more preferably 15 wt% or less.

Of the cyclic olefin-based polymer (a) described above, preferred is the compound selected from the group consisting of the α-olefin-cyclic olefin random copolymer [A-1], the ring-opened polymer or copolymer of the cyclic olefin [A-2] and the hydrogenated product of the ring-opened polymer or copolymer of the cyclic olefin [A-3], having a softening point (TMA) of 80°C or higher and an intrinsic viscosity [η] of 0.05 to 10 dl/g.

Among these compounds, the α-olefin-cyclic olefin random copolymer [A-1] is more preferred, especially preferred are the ethylene-tetracyclododecene copolymer and the ethylene-norbornene copolymer.

Next, the polycyclobexane-type resin (b) will be described below. The polycyclohexane-type resin (b) used in the present invention includes a polycyclohexane obtained by polymerizing 1,3-cyclohexadiene using an alkyl lithium and an amine as an initiator and hydrogenating the double bonds in the polymer chain of the resulting poly-1,3-cyclohexadiene, a hydrogenated copolymer of 1,3-cyclohexadiene and an α-olefin or styrene, a hydrogenated block copolymer of the these monomer and butadiene as a soft segment for the purpose of improving impact strength, a hydrogenated copolymer of an aromatic vinyl compound such as styrene or an α-alkylstyrene, etc. and an α-olefin having 3 to 20 carbon atoms, and a polycyclohexylethylene obtained by hydrogenation of a styrenic polymer of styrene or an α-alkylstyrene. In thise case, the hydrogenation rate of the aromatic ring is preferably 60% or more, more preferably 90% or more.

In the polycyclohexylethylene advantageously used in the present invention, the ratio (Mw/Mn) of weight-average molecular weight (Mw) to number-average molecular weight (Mn) is generally 6 or less, preferably 5 or less, more preferably 3 or less, most preferably 2.5 or less. The weight-average molecular weight is preferably in the range of 10,000 to 1,000,000, more preferably 20,000 to 700,000, much more preferably 50,000 to 500,000. Most preferred is polycyclohexylethylene having a weight average molecular weight of 70,000 to 300,000, since strength and moldability are well balanced.

The glass transition temperature is generally in the range of 50 to 300°C, preferably 60 to 280°C, more preferably 70 to 250°C. The crystallinity is generally in the range of 0 to 20%, preferably 0 to 10%, more preferably 0 to 5%. The density is in the range of 0.80 to 1.50 g/cm³, preferably 0.85 to 1.0 g/cm³, more preferably 0.90 to 0.95 g/cm³.

The polycyclohexylethylene can be obtained by hydrogenating the aromatic rings of a polystyrene, etc by known methods, which are described in, e.g., Japanese Patent Laid-Open Publication No. 7(1995)-247321, U.S. Patent No. 5,612,422, etc. The hydrogenation degree of the aromatic ring(s) is preferably at least 60%, more preferably 90% or more.

Subsequent description is made on the 4-methyl-1-pentene-based polymer (c). The 4-methyl-1-pentene-based polymer (c) used in the present invention includes a homopolymer of 4-methyl-1-pentene alone or a copolymer of 4-methyl-1-pentene with other α-olefin, e.g., a copolymer with α-olefin having 2 to 20 carbon atoms, such as ethylene, propylene, 1-butene, 1-hexene, 1-octene, 1-decene, 1-tetradecene, 1-octadecene, etc. In view of heat stability upon steam sterilization, it is particularly preferred to use the 4-methyl-1-pentene homopolymer or the copolymer of 4-methyl-1-pentene and the aforesaid α-olefin containing at least 50% by mol, preferably at least 70% by mol, of the 4-methyl-1-pentene constituent units.

The MFR of the 4-methyl-1-pentene-baed polymer (c) is preferably within the range of 1 to 400 g/10 mins., more preferably 10 to 300 g/10 mins., as measured at 260°C under a load of 5 kg in accordance with ASTM-D1238.

Among the thermoplastic resin [A] described above, preferred is the cyclic olefin-based polymer selected from [A-1], [A-2] and [A-3] above, having a softening point (TMA) of 80°C or higher and an intrinsic viscosity [η] of 0.05 to 10 dl/g.

In the present invention, if necessary, a resin composition comprising the thermoplastic resin further containing other resins may be used. These other resins are incorporated in such an amount that the objects of the invention are not marred.

Examples of such resin components that may be incorporated in the thermoplastic resin are shown below.
(1) Polymer derived from a hydrocarbon having one or two unsaturated bonds:
   Specific examples of such a polymer include a polyolefin such as polyethylene, polypropylene, polymethylbutene-1, poly-4-methylpentene-1, polybutene-1 and polystyrene. These polyolefins may be crosslinked.
(2) Halogen-containing vinyl polymer:
   Specific examples of the halogen-containing vinyl polymer are polyvinyl chloride, polyvinylidene chloride, polyvinyl fluoride, polychloroprene and chlorinated rubber.
(3) Polymer derived from an α,β-unsaturated acid and its derivatives:
   Specific examples of such a polymer include polyacrylate, polymethacrylate, polyacrylamide and polyacrylonitirle; and a copolymer of monomers making up the polymers above, such as acrylonitrile-butadiene-styrene copolymer, acrylonitrile-styrene copolymer, acrylonitrile-styrene-acrylate copolymer, etc.
(4) Polymer derived from an unsaturated alcohol and an amine, or an acyl derivative of the alcohol or its acetal:
   Specific examples of such a polymer are polyvinyl alcohol, polyvinyl acetate, polyvinyl stearate, polyvinyl benzoate, polyvinyl maleate, polyvinyl butyral, polyallyl phthalate, polyallyl melamine, and a copolymer of monomers making up these polymers above, e.g., ethylene-vinyl acetate copolymer.
(5) Polymer derived from an epoxide:
   Specific examples of such polymers are polyethylene oxide and a polymer derived from bisglycidyl ether.
(6) Polyacetal:
   Specific examples include polyoxymethylene, polyoxyethylene and a polyolxymethylene containing ethylene oxide as a comonomer.
(7) Polyphenylene oxide:
(8) Polycarbonate:
(9) Polysulfone:
(10) Polyurethane and urea resin:
(11) Polyamide and copolyamide derived from a diamine and a dicarboxylic acid and/or an aminocarboxylic acid, or the corresponding lactam:
   Specific examples include nylon 6, nylon 66, nylon 11 and nylon 12.
(12) Polyester derived from a dicarboxylic acid and a dialcohol and/or an oxycarboxylic acid, or the corresponding lactone:
   Specific examples include polyethylene terephthalate, polybutyrene terephthalate and poly-1,4-dimethylol-cyclohexane terephthalate.
(13) Polymer with a crosslinking structure derived from an aldehyde and phenol, urea or melamine:
   Specific examples include a phenol-formaldehyde resin, a urea-formaldehyde resin and a melamine-formaldehyde resin.
(14) Alkyd resin:
   The alkyd resin is specifically a glycerine-phthalic acid resin.
(15) Unsaturated polyester resin and halogen-containing modified resin obtained from a copolyester of a saturated or unsaturated dicarboxylic acid and a polyvalent alcohol, using a vinyl compound as a crosslinking agent:
(16) Naturally occurring polymer:
   The naturally occurring polymer includes cellulose, rubber, protein or a derivative thereof, with specific examples of cellulose acetate, cellulose propionate and a cellulose ether.
(17) Soft polymer:
   Typical examples of the soft polymer include a soft polymer containing a cyclic olefin component, an α-olefin-based copolymer, an α-olefin-diene-based copolymer, an aromatic vinyl hydrocarbon-conjugated diene soft copolymer, a soft polymer or copolymer composed of isobutylene or isobutylene-conjugated diene, etc.

To blend the thermoplastic resin used in the present invention with other resin components or additives, conventionally known methods are applicable. For example, all the components are blended together at the same time.

### Polyvalent alcohol [B]

The polyvalent alcohol [B] used in the present invention has a molecular weight of not greater than 2000, and a ratio of the carbon atom number to the hydroxy group number in the same molecule between 1.5 to 30, inclusive, preferably 3 to 20, more preferably 6 to 20, and has not less than 6 carbon atoms. So long as the polyvalent alcohol within the ratio range and the carbon atom number range is used, good compatibility with the thermoplastic resin [A] is achieved so that foaming to adversely affect the transparency does not occur during melt kneading. A preferred range of the carbon atom number is between 6 and 100, more preferably between 6 and 60, inclusive.

As the polyvalent alcohol [B], preferably at least one hydroxyl group in the molecule thereof is bonded to the primary carbon atom.

The polyvalent alcohol [B] of the present invention may contain an ether bond, a thioether bond, an alicyclic hydrocarbon group or an aromatic hydrocarbon group in the molecule. A preferred example of the polyvalent alcohol is an aliphatic polyvalent alcohol. Polyvalent alcohols containing an ester group are outside the invention.

Specific examples of the polyvalent alcohols include 3,7,11,15-tetramethyl-1,2,3-trihydroxyhexadecane, dihydroxyoctane, trihydroxyoctane, tetrahydroxyoctane, dihydroxynonane, trihydroxynonane, tetrahydroxynonane, pentahydroxynonane, hexahydroxynonane, dihydroxytriacontane, trihydroxytriacontane, eicosahydroxytriacontane, etc.

Of these polyvalent alcohols, preferred is 3,7,11,15-tetramethyl-1,2,3-trihydroxyhexadecane used in EXAMPLES later described.

### Thermoplastic resin composition

The thermoplastic resin composition in accordance with the present invention comprises the thermoplastic resin [A] and the polyvalent alcohol [B], in which the polyvalent alcohol [B] is contained in an amount of 0.01 to 10 parts by weight, preferably 0.05 to 10 parts by weight, more preferably 0.05 to 7 parts by weight, much more preferably 0.1 to 5 parts by weight, based on 100 parts by weight of the thermoplastic resin [A]. Within the range set forth for the polyvalent alcohol, reduction in the transparency accompanied by an environmental change can be minimized without affecting the transparency or water absorption of the thermoplastic resin [A].

The thermoplastic resin composition in accordance with the present invention is excellent in transparency, low birefringence, heat resistance, thermal aging resistance, chemical resistance, solvent resistance, dielectric properties, various mechanical properties, precision moldability and moisture resistance (low water absorption). Particularly because the thermoplastic resin [A] and the polyvalent alcohol [B] having such a particular structure are contained in a specified proportion, its excellent transparency can be retained, without affecting the transparency and water absorption of the thermoplastic resin, even when the environment changes from high temperature and high humidity conditions to normal temperature and normal humidity conditions.

In addition to the thermoplastic resin [A] and the polyvalent alcohol [B], the thermoplastic resin composition described above may optionally contain various other additives, for example, a stabilizer such as a weathering stabilizer or a heat stabilizer, a cross-linking agent, a cross-linking aid, an antistatic agent, a fire retardant, an anti-slip agent, an anti-blocking agent, an anti-fogging agent, a lubricant, a dye, a pigment, a mineral oil-based softener, a petroleum resin, naturally occurring oil, synthetic oil, a wax, an organic or inorganic filler, etc., provided that the objects of the invention are not marred.

Typical weathering stabilizers optionally contained are UV absorbants including a benzophenone compound, a benzotriazole compound, a nickel compound and a hindered amine compound. Specific examples of the UV absorbants include 2,2',4,4'-tetrahydroxybenzophenone, 2-(2'-hydroxy-3'-t-butyl-5'-butylphenyl)-5-chlorobenzotriazole, 2-(2'-hydroxy-3'-t-butyl-5'-butylphenyl)benzotriazole, nickel salt of bis(3,5-di-t-butyl-4-hydroxybenzoylphosphoric acid ethyl ester and bis(2,2',6,6'-tetramethyl-4-piperidine)sebacate.

The stabilizer which may be optionally contained includes a phenolic antioxidant such as tetrakis[methylene-3-(3,5-di-t-butyl-4-hydroxyphenyl)propionate]methane, an alkyl β-(3,5-di-t-butyl-4-hydroxyphenyl)propionate, 2,2'-oxamidobis[ethyl-3-(3,5-di-t-butyl-4-hydroxyphenyl)propionate, etc.; a fatty acid metal salt such as zinc stearate, calcium stearate, calcium 1,2-hydroxystearate, etc. These stabilizers may be used in combination; for example, tetrakis[methylene-3-(3,5-di-t-butyl-4-hydroxyphenyl)propionate]methane may be used in combination with zinc stearate or calcium stearate.

Phosphor-based stabilizers such as distearyl pentaerythritol diphosphite, di(nonylphenyl)pentaerythritol diphosphite, phenyl-4,4'-isopropylidenediphenolpentaerythritol diphosphite, bis(2,4-di-t-butylphenyl)pentaerythritol diphosphite, bis(2,6-di-t-butyl-4-methylphenyl)pentaerythritol diphosphite, phenylbisphenol-A-pentaerythritol diphosphite, tris(2,4-di-t-butylphenyl) phosphite, tris(nonylphenyl)phosphite, tetrakis(2,4-di-t-butylphenyl)-4,4'-biphenylenediphosphite, bis(2,6-di-t-butyl-4-methylphenyl)pentaerythritol diphosphite, etc. may also be used as the stabilizers.

These stabilizers may be used alone or in combination of two or more.

Examples of the organic or inorganic fillers include silica, diatomaceous earth, alumina, titanium oxide, magnesium oxide, pumice powders, pumice balloon, aluminum hydroxide, magnesium hydroxide, basic magnesium carbonate, dolomite, calcium sulfate, potassium titanate, barium sulfate, calcium sulfite, talc, clay, mica, asbestos, glass flakes, glass beads, calcium silicate, montmorillonite, bentonite, graphite, aluminum powders, molybdenum sulfide, etc.

The thermoplastic resin composition of the present invention can be produced by optionally adopting any one of conventional methods. In more detail, for example, when the thermoplastic resin is melted using an extruder or when the thermoplastic resin already melted is passed through an extruder, a predetermined amount of the polyvalent alcohol is fed into the extruder and kneaded to form pellets. Or, the thermoplastic resin composition may be directly formed into a sheet, film or blow molded article through the extruder.

When no extruder is employed, the composition may be prepared by adding a predetermined amount of the polyvalent alcohol to a solution of the thermoplastic resin in a solvent, stirring the mixture and then volatilizing the solvent. The polyvalent alcohol may also be added prior to the step in which the resin passes through an extruder, provided that resin production is not disturbed.

Furthermore, there may be used a method for impregnating the polyvalent alcohol into powders or pellets of the thermoplastic resin added in the alcohol by rising temperature and pressure. These methods may be used in combination.

By use of the thermoplastic resin composition thus produced which contains the polyvalent alcohol in accordance with the present invention, a molded article having an excellent transparency which hardly deteriorates the transparency upon steam sterilization or under high temperature and high humidity conditions and thus causes no turbidity in external appearance, notwithstanding that the thermoplastic resin having low water absorption rate is used.

To produce the thermoplastic resin molded article of the present invention, any conventional known method may be used. For example, the thermoplastic resin composition comprising the thermoplastic resin and the polyvalent alcohol and, if necessary, other additives, obtained as above may be molded into a variety of molded articles such as a lens-like, container-like, tray-like, sheet-like or film-like mold, by subjecting the resin composition to extrusion molding, injection molding, injection compression molding, inflation molding, blow molding, extrusion blow molding, injection blow molding, press molding, vacuum molding or calendar molding.

The molded articles of the thermoplastic resin composition in accordance with the present invention are excellent in transparency, low birefringence, heat resistance, thermal aging resistance, chemical resistance, solvent resistance, dielectric properties, mechanical properties such as rigidity, precision moldability and moisture resistance. Thus, the mold from the composition of the present invention finds specific applications for optical parts, e.g., a plastic lens such as a spherical lens, a non-spherical lens, a Fresnél lens, etc., a prism, a light guiding board, a reflector, optical fibers, etc.; optical recording media such as CD, MD, DVD, MO, PD, etc.; a transparent board; medical or pharmaceutical containers such as a testing tube, a vial bottle, an ampoule, a tablet bottle, a pre-filled syringe, a disposable syringe, an analyzer cell, a transfusion bag, a blood collection tube, etc.; a wide mouth bottle; containers used in miscellaneous daily goods and for foodstuffs such as a shampoo bottle, a container for coffee, a seasoning bottle, a beverage container, etc.; a transparent sheet, etc. In these products, a plastic lens, a container, a transparent sheet and board, optical recording media are more preferable applications.

### EXAMPLES

Next, the present invention will be described in more detail but is not deemed to be limited to the following EXAMPLES.

Methods for determining the physical properties in the following EXAMPLES are shown below.
(1) Softening point (TMA)
   The softening point was determined by deformation behavior of a 1 mm thick sheet under heat, using Thermo Mechanical Analyzer manufactured by Du Pont. A quartz needle under a load of 49 g was put on the sheet. While elevating a temperature at a rate of 5°C/min., a temperature at which the needle sank into the sheet in a depth of 0.635 mm was made its softening point (TMA).
(2) Light transmittance and HAZE:
   Measured in accordance with ASTM-D1003. A specimen of a square board cut into 130 mm x 120 mm x 3 mm (thickness) was molded at a mold temperature of 115°C and a cylinder temperature of 270°C using an injection molding machine (IS-50 available from Toshiba Machine Co., Ltd.) and provided for the measurement.
(3) Water absorption rate:
   The square board molded as in (2) above was dried at 80°C for 24 hrs. under vacuum of 1 torr. and then immersed in deionized water of 23°C for 100 hours. The square board was removed from water. The water on the surface of the square board was then wiped off and 2 g of the board was cut out. The water content of the 2 g of the board was measured by the Karl-Fischer method to determine the water absorption rate (wt%).
(4) Melt flow rate (MFR):
   Measured at 260°C or 200°C under a load of 2.16 kg or 5 kg in accordance with ASTM-D1238.
(5) Glass transition temperature (Tg):
   Measured at an elevation temperature of 10°C/min. using DSC-20 manufactured by Seiko Denshi Kogyo Co., Ltd.
(6) Crystallinity:
   Measured by X-ray diffraction technique.
(7) Content of aromatic rings:
   Measured by ¹H-NMR and ¹³C-NMR techniques.

### EXAMPLE 1

As the thermoplastic resin [A], a random copolymer of ethylene and tetracyclododecene having whole light transmittance of 90%, HAZE of 3%, water absorption rate of 0.01% or less, softening point (TMA) of 150°C, intrinsic viscosity [η] of 0.6 dl/g and a glass transition temperature (Tg) of 138°C was used. To 100 parts by weight of the random copolymer above 2 parts by weight of 3,7,11,15-tetramethyl-1,2,3-trihydroxyhexadecane (molecular weight, 331; carbon atom number, 20; C number/OH number = 6,7) was added as the polyvalent alcohol [B] and further 0.6 part by weight of tetrakis[methylene-3-(3,5-di-t-butyl-4-hydroxyphenyl)propionate]methane was added to the mixture. The resulting mixture was fed into a twin-screw extruder (TEX-44 manufactured by The Japan Steel Works, Ltd.) at a cylinder temperature of 250°C and melt kneaded to give the thermoplastic resin composition.

The thermoplastic resin composition thus obtained was injection molded using an injection molding machine (IS-55EPN manufactured by Toshiba Machine Co., Ltd.) to prepare a square board of 3 mm thick. The square board was allowed to stand for 48 hours at 80°C under relative humidity of 90% and then taken out into the ambient environment under normal temperature and normal humidity. The transparency was evaluated both in terms of a change in spectral transmittance (ΔTr (600 nm)) obtained by subtracting the spectral transmittance at a wavelength of 600 nm after the testing from the spectral transmittance at 600 nm before the testing and in terms of a change in HAZE (ΔHAZE) obtained by subtracting HAZE before the testing from HAZE after the testing. The results are given in Table 1.

### EXAMPLE 2

The procedure of Example 1 was repeated except that 3,9-bis(1,1-dimethyl-2-hydroxyethyl)-2,4,8,10-tetraoxaspiro[5.5]undecane (molecular weight, 304; carbon atom number, 15; C number/OH number = 7.5) was used as the polyvalent alcohol [B] instead of 3,7,11,15-tetramethyl-1,2,3-trihydroxyhexadecane. Thus, a square board was prepared to evaluate the transparency. The results are shown in Table 1.

### COMPARATIVE EXAMPLE 1

A square board was prepared to evaluate the transparency in a manner similar to EXAMPLE 1 except for adding no polyvalent alcohol to the resin. The results are shown in Table 1.

### COMPARATIVE EXAMPLE 2

Using pentaerythritol (molecular weight, 136; carbon atom number, 5; C number/OH number = 1.25) as the polyvalent alcohol [B], it was attempted to prepare a transparent resin composition by melt kneading in a manner similar to EXAMPLE 1. However, it was impossible to mold due to foaming generated.

### EXAMPLE 3

After the external appearance of the square board of 3 mm thick obtained by injection molding in EXAMPLE 1 was visually observed, the board was subjected to steam sterilization at 121°C for 20 minutes. The transparency was evaluated in terms of the change in spectral transmittance (ΔTr (600 nm)) and the change in RAZE (ΔHAZE) before and after the testing. The results are shown in Table 1.

### EXAMPLE 4

After the external appearance of the square board of 3 mm thick obtained by injection molding in EXAMPLE 2 was visually observed, the board was treated as in EXAMPLE 3. The transparency was evaluated in terms of the change in spectral transmittance (ΔTr (600 nm)) and the change in HAZE (ΔHAZE) before and after the testing. The results are shown in Table 1.

### EXAMPLE 5

The procedure of EXAMPLE 1 was repeated except that poly-4-methyl-1-pentene (TPX RT-18 manufactured by Mitsui Chemicals, Inc., MFR[260°C under a load of 5 kg]: 23 g/10 mins., glass transition temperature (Tg): 24°C) having whole light transmittance of 94%, HAZE of 3% and water absorption rate of 0.01% or less was used as the thermoplastic resin [A]. The thermoplastic resin composition thus obtained was injection molded using an injection molding machine (IS-55EPN manufactured by Toshiba Machine Co., Ltd.) to prepare a square board of 3 mm thick. After the external appearance of the square board was visually observed, the board was subjected to steam sterilization at 121°C for 20 minutes. The transparency was evaluated in terms of the change in spectral transmittance (Δ Tr (600 nm)) and the change in HAZE (ΔHAZE) before and after the testing. The results are shown in Table 1.

### EXAMPLE 6

A transparent resin composition was prepared in a manner similar to EXAMPLE 2 except that poly-4-methyl-1-pentene (TPX RT-18 manufactured by Mitsui Chemicals, Inc., MFR [260°C under a load of 5 kg]: 23 g/10 mins., glass transition temperature (Tg): 24°C) having whole light transmittance of 94%, HAZE of 3% and water absorption rate of 0.01% or less was used as the thermoplastic resin [A]. The transparent resin composition thus prepared was evaluated as in EXAMPLE 5. The results are shown in Table 1.

### COMPARATIVE EXAMPLE 3

The transparency was evaluated as in EXAMPLE 3, except that the square board was prepared without adding any polyvalent alcohol. The results are shown in Table 1.

### COMPARATIVE EXAMPLE 4

The transparency was evaluated as in EXAMPLE 5, except that the square board was prepared without adding any polyvalent alcohol. The results are shown in Table 1.

### EXAMPLE 7

Polycyclohexylethylene (whole light transmittance: 91%, HAZE: 3%, water absorption rate: 0.01% or less, glass transition temperature (Tg); 146°C, aromatic ring content: 2 wt% or less) was prepared by hydrogenating 100 g of polystyrene (manufactured by Nihon Polystyrene Co., Ltd ., G590, MFR [200°C under a 5 kg load]: 3 g/10 mins.) having whole light transmittance of 89%, a HAZE value of 2% and water absorption rate of 0.05% in a cyclohexane solvent at 100°C for 2 hours under 40 kg/cm² in the presence of Ni(acac)₂ and triisobutyl aluminum as catalyst. The thus obtained transparent resin was used as the thermoplastic resin [A]. After 2 parts by weight of 3,7,11,15-tetramethyl-1,2,3-trihydroxybexadecane was kneaded in 100 parts of the thus obtained transparent resin with a Labo Plastomill to mold into a press sheet of 30 mm x 30 mm x 3 mm (thickness) at a temperature of 280°C. The square board was treated in a manner similar to EXAMPLE 1. The results are shown in Table 1.

### COMPARATIVE EXAMPLE 5

The transparency was evaluated as in EXAMPLE 7, except that the square board was prepared without adding any polyvalent alcohol. The results are shown in Table 1.

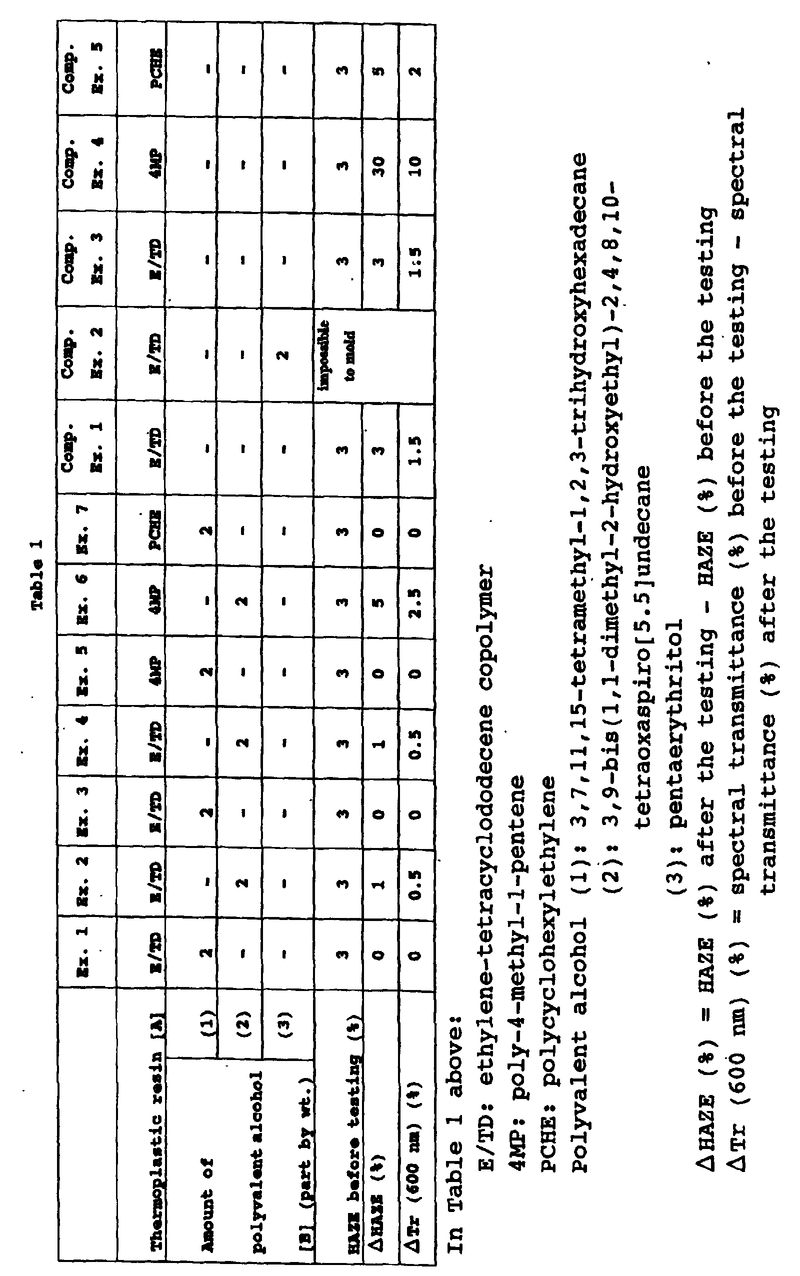

### POSSIBILITY OF INDUSTRIAL USE

The thermoplastic resin composition in accordance with the present invention provides excellent transparency, low birefringence, heat resistance, thermal aging resistance, chemical resistance, solvent resistance, dielectric properties, various mechanical properties, precision moldability, moisture resistance (low water absorption), etc. In particular, the thermoplastic resin composition can stably maintain the excellent transparency even with any environmental change. Therefore the thermoplastic resin composition is greatly advantageous especially for use in optical molded articles such as a plastic lens, various contains for medical, pharmaceutical and food applications, a transparent sheet and board, and optical recording media such as CD, MD, DVD, MO, PD or the like.

## Claims

1. A thermoplastic resin composition comprising:
[A] a thermoplastic resin having a HAZE value of not greater than 10% and whole light transmittance of not less than 80%, when measured with a molded article in a thickness of 3 mm according to ASTM-D1003; water absorption rate of not greater than 0.1% as measured by immersion in water at 23°C for 100 hours; a glass transition temperature of not lower than 10°C; and an aromatic ring content of not greater than 20 wt%; and,
[B] a polyvalent alcohol having at least 6 carbon atoms and having a molecular weight of not greater than 2000, wherein a ratio of the carbon atom number to the hydroxy group number in the same molecule is between 1.5 and 30, inclusive (in which the polyvalent alcohol may optionally contain, in the molecule thereof, an ether bond, a thioether bond, an alicyclic hydrocarbon group or an aromatic hydrocarbon group);
in which the polyvalent alcohol [B] is contained in an amount of 0.01 to 10 parts by weight based on 100 parts by weight of the thermoplastic resin [A].

2. The thermoplastic resin composition according to claim 1, wherein the thermoplastic resin [A] is at least one resin selected from:
(a) a cyclic olefin-based polymer selected from the group consisting of [A-1], [A-2], [A-3] and [A-4] below;
(b) a polycyclohexane-type resin; and,
(c) a 4-methyl-1-pentene-based polymer;
[A-1] an α-olefin-cyclic olefin random copolymer obtained by copolymerizing an α-olefin having 2 to 20 carbon atoms with a cyclic olefin represented by formula (I) or (II) below: 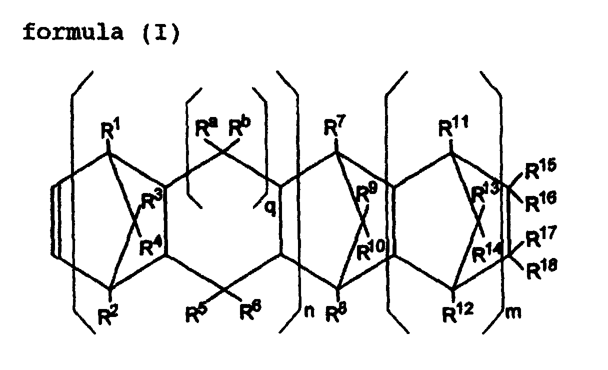 wherein n is 0 or 1; m is 0 or an integer of at least 1; q is 0 or 1; each of R¹ through R¹⁸ and R^{a} and R^{b} independently represents a hydrogen atom, a halogen atom or a hydrocarbon group; R¹⁵ through R¹⁸ may be combined with each other to form a monocyclic or polycyclic ring, which monocyclic or polycyclic ring may contain a double bond(s) and, R¹⁵ and R¹⁶ or R¹⁷ and R¹⁸ may be combined together to form an alkylidene group; and, 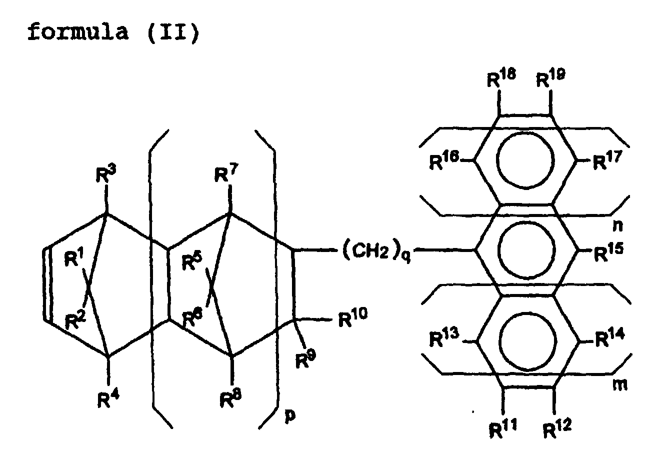 wherein p and q each are 0 or an integer of at least 1; m and n each are 0, 1 or 2; each of R¹ through R¹⁹ independently represents a hydrogen atom, a halogen atom, an aliphatic hydrocarbon group, an alicyclic hydrocarbon group, an aromatic hydrocarbon group or an alkoxy group; the carbon atom to which R⁹ and R¹⁰ are bound may be bonded to the carbon atom to which R¹³ or R¹¹ are bound, directly or via an alkylene group having 1 to 3 carbon atoms; or when n and m are 0, R¹⁵ and R¹² or R¹⁵ and R¹⁹ may be combined together to form a monocyclic or polycyclic aromatic ring.
[A-2] a ring-opened polymer or copolymer of the cyclic olefin represented by formula (I) or (II) above;
[A-3] a hydrogenated product of the ring-opened polymer or copolymer [A-2] defined above; and,
[A-4] a graft-modified compound of [A-1], [A-2] or [A-3] defined above.

3. The thermoplastic resin composition according to claim 2, wherein the cyclic olefin-based polymer (a) is selected from the group consisting of [A-1], [A-2] and [A-3] defined below, has a softening point (TMA) of not lower than 80°C and an intrinsic viscosity [η] of 0.05 to 10 dl/g;
[A-1] an α-olefin-cyclic olefin random copolymer obtained by copolymerizing an α-olefin having 2 to 20 carbon atoms with the cyclic olefin represented by formula (I) or (II) above;
[A-2] a ring-opened polymer or copolymer of the cyclic olefin represented by formula (I) or (II) above;
[A-3] a hydrogenated product of the ring-opened polymer or copolymer [A-2] described above.

4. A thermoplastic resin composition comprising:
[A] at least one thermoplastic resin selected from (a) through (c) below:
(a) a cyclic olefin-based polymer selected from the group consisting of [A-1], [A-2], [A-3] and [A-4] below;
(b) a polycyclohexane-type resin; and,
(c) a 4-methyl-1-pentene-based polymer; and,
[B] a polyvalent alcohol having at least 6 carbon atoms and having a molecular weight of not greater than 2000, wherein a ratio of the carbon atom number to the hydroxy group number in the same molecule is between 1.5 and 30, inclusive (in which the polyvalent alcohol may optionally contain in the molecule thereof an ether bond, a thioether bond, an alicyclic hydrocarbon group or an aromatic hydrocarbon group); in which the polyvalent alcohol [B] is contained in an amount of 0.01 to 10 parts by weight based on 100 parts by weight of the thermoplastic resin [A];
[A-1] an α-olefin-cyclic olefin random copolymer obtained by copolymerizing an α-olefin having 2 to 20 carbon atoms with a cyclic olefin represented by formula (I) or (II) below: 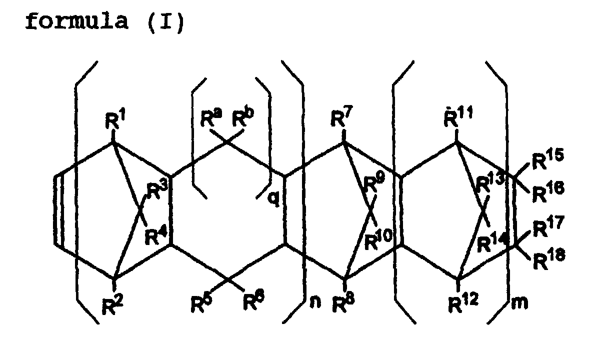 wherein n is 0 or 1; m is 0 or an integer of at least 1; q is 0 or 1; each of R¹ through R¹⁸ and R^{a} and R^{b} independently represents a hydrogen atom, a halogen atom or a hydrocarbon group; R¹⁵ through R¹⁸ may be combined with each other to form a monocyclic or polycyclic ring, which monocyclic or polycyclic ring may contain a double bond(s) and, R¹⁵ and R¹⁶ or R¹⁷ and R¹⁸ may be combined together to form an alkylidene group; and, 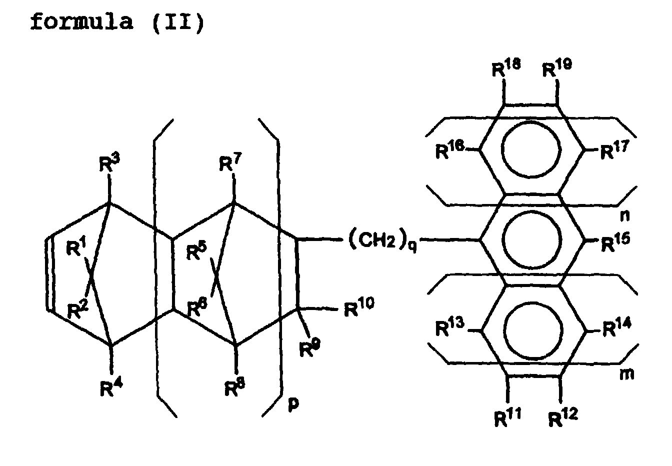 wherein p and q each are 0 or an integer of at least 1; m and n each are 0, 1 or 2; each of R¹ through R¹⁹ independently represents a hydrogen atom, a halogen atom, an aliphatic hydrocarbon group, an alicyclic hydrocarbon group, an aromatic hydrocarbon group or an alkoxy group; the carbon atom to which R⁹ and R¹⁰ are bound may be bonded to the carbon atom to which R¹³ or R¹¹ are bound, directly or via an alkylene group having 1 to 3 carbon atoms; or when n and m are 0, R¹⁵ and R¹² or R¹⁵ and R¹⁹ may be combined together to form a monocyclic or polycyclic aromatic ring.
[A-2] a ring-opened polymer or copolymer of the cyclic olefin represented by formula (I) or (II) above;
[A-3] a hydrogenated product of the ring-opened polymer or copolymer [A-2] defined above; and,
[A-4] a graft-modified compound of [A-1], [A-2] or [A-3] defined above.

5. The thermoplastic resin composition according to claim 4, wherein the thermoplastic resin [A] is a cyclic olefin-based polymer selected from the group consisting of [A-1], [A-2] and [A-3] defined below, has a softening point (TMA) of not lower than 80°C and an intrinsic viscosity [η] of 0.05 to 10 dl/g;
[A-1] an α-olefin-cyclic olefin random copolymer obtained by copolymerizing an α-olefin having 2 to 20 carbon atoms with the cyclic olefin represented by formula (I) or (II) above;
[A-2] a ring-opened polymer or copolymer of the cyclic olefin represented by formula (I) or (II) above;
[A-3] a hydrogenated product of the ring-opened polymer or copolymer [A-2] described above.

6. The thermoplastic resin composition according to any one of claims 1 to 5, wherein at least one hydroxyl group of the polyvalent alcohol is bonded to the primary carbon atom.

7. The thermoplastic resin composition according to any one of claims 1 to 6, wherein the polyvalent alcohol is an aliphatic polyvalent alcohol.

8. The thermoplastic resin composition molded from the thermoplastic resin composition according to any one of claim 1 to 7, wherein a HAZE value is not greater than 10%, when measured with a molded article in a thickness of 3 mm according to ASTM-D1003.

9. A thermoplastic resin molded product from the thermoplastic resin composition according to any one of claims 1 to 8.

10. A plastic lens comprising the thermoplastic resin composition according to any one of claims 1 to 8.

11. A container comprising the thermoplastic resin composition according to any one of claims 1 to 8.

12. A transparent sheet or transparent board comprising the thermoplastic resin composition according to any one of claims 1 to 8.

13. Optical recording media comprising the thermoplastic resin composition according to any one of claims 1 to 8.
